# EUROPÄISCHE PATENTSCHRIFT

(11) **EP 0 823 923 B1**
(45) Veröffentlichungstag und Bekanntmachung des Hinweises auf die Patenterteilung: **27.01.1999**
(21) Anmeldenummer: 96913521.9
(22) Anmeldetag: 22.04.1996
(51) Int. Cl.: C08G 69/10, C08G 73/06, C11D 3/37, C02F 5/12, C08G 69/00, C08G 69/02, C08F 283/04

(54) **VERFAHREN ZUR HERSTELLUNG VON POLYMEREN MIT WIEDERKEHRENDEN SUCCINYLEINHEITEN**
PROCESS FOR PREPARING POLYMERS WITH RECURRING SUCCINYL UNITS
PROCEDE DE PREPARATION DE POLYMERES A MOTIFS SUCCINYLES RECURRENTS

(30) Priorität: 04.05.1995 DE 19516399
(43) Veröffentlichungstag der Anmeldung: 18.02.1998
(73) Patentinhaber: BAYER AG, 51368 Leverkusen (DE)
(72) Erfinder: SCHUBART, Rüdiger, D-51467 Bergisch Gladbach (DE)
(86) Internationale Anmeldenummer: EP9601671
(87) Internationale Veröffentlichungsnummer: WO9634908

(56) Entgegenhaltungen:
- EP-A- 0 256 366
- EP-A- 0 593 187
- EP-A- 0 604 813
- WO-A-93/23452
- WO-A-94/01486
- WO-A-94/06845
- WO-A-95/02007
- DE-A- 4 023 463

## Beschreibung

Die Erfindung betrifft ein Verfahren zur Herstellung von Polymeren mit wiederkehrenden Succinyleinheiten, insbesondere von Polyasparaginsäure und Polysuccinimid.

Die Herstellung und Verwendung von Polysuccinimid und Polyasparaginsäure (PAA) und ihrer Derivate ist seit langem Gegenstand zahlreicher Veröffentlichungen und Patente.

US-A 4 839 461 (= EP-A 0 256 366) beschreibt die Herstellung von Polyasparaginsäure aus Maleinsäureanhydrid, Wasser und Ammoniak. Maleinsäureanhydrid wird im wäßrigen Medium unter Zugabe von konzentrierter Ammoniaklösung umgesetzt und anschließend polymerisiert. Während dieser Polymerisation wird die Masse zunächst hochviskos und anschließend fest-porös, was ein verfahrenstechnisch aufwendiges Handling erfordert.

US-A 5 296 578 beschreibt die Herstellung von PSI aus Maleinsäureanhydrid, Wasser und Ammoniak. Maleinsäureanhydrid wird in Wasser zu Maleinsäure hydrolysiert und anschließend mit konzentrierter Ammoniaklösung in das Ammoniumsalz überführt. In einem Rührreaktor wird das Wasser aus der Lösung verdampft und anschließend das Monoammoniumsalz in Masse bei Temperaturen oberhalb von 170°C zu PSI polymerisiert. Hierbei wird die Masse in mehreren Stunden über hochviskose Phasenzustände hinweg zum festen PSI umgesetzt und anschließend zu PAA hydrolysiert.

US-A 5 288 783 beschreibt die Herstellung von PAA aus Maleinsäure oder Fumarsäure, Wasser und Ammoniak. Maleinsäureanhydrid wird mit Wasser im Rührkessel vermischt und unter Kühlen zu Maleinsäure umgesetzt. Durch Zugabe von konzentrierter Ammoniaklösung wird das Maleinsäuremonoammoniumsalz hergestellt. Anschließend wird das enthaltene Wasser verdampft und das trockene Monoammoniumsalz bei Temperaturen von 190 bis 350°C polymerisiert. Alternativ wird vorgeschlagen, das in wäßriger Lösung vorliegende Monoammoniumsalz bei Temperaturen von 160 bis 200°C durch Extrusion zu PSI weiter zu verarbeiten. Das auf einem der beiden Verfahrenswegen hergestellte PSI wird anschließend alkalisch zu PAA hydrolysiert.

EP-A 593 187 beschreibt die Herstellung von PSI durch thermische Polymerisation von Maleinamidsäure bei Temperaturen von 160 bis 330°C bei einer Reaktionsdauer von 2 Minuten bis 6 Stunden. Es wird auch auf die Polykondensation im Lösungsmittel unter Verwendung von Kondensationshilfsmitteln hingewiesen.

DE-A 4 023 463 (US-A 5 142 062) beschreibt ein Verfahren zur Herstellung von Polysuccinimid in Gegenwart von Phosphorsäuren. DE-A 4 221 875 (= WO 94/01486) beschreibt die Herstellung von sogenannten modifizierten Polyasparaginsäuren durch Polykondensation von Asparaginsäure mit weiteren Verbindungen, gegebenenfalls in Gegenwart von Phosphorsäuren oder Derivaten davon. Aus WO 95/02007 ist bekannt, Polymerisate der Asparaginsäure durch Erhitzen von Maleinsäureanhydrid und Säurederivaten des Ammoniaks herzustellen. Als Säure wird u.a. Phosphorsäure angegeben. Von den entsprechenden Salzen werden aber lediglich Diammoniumhydrogenphosphat und Monoammoniumdihydrogenphosphat erwähnt. Aus EP-A 604 813 (DE-A 4 244 031) ist ein Verfahren zur Herstellung von Polysuccinimid und Polyasparaginsäure aus Maleinamidsäure bekannt, bei dem man Maleinsäureanhydrid und Ammoniak zu Maleinamidsäure umsetzt und die Maleinamidsäure einer Polymerisation unterwirft, die in Gegenwart von Phosphorsäuren und Polyphosphorsalzen durchgeführt werden kann.

Nachteilig an den bekannten Herstellungsverfahren ist, daß sie sehr aufwendig sind und zu einem großen Teil zu Produkten mit unbefriedigender biologischer Abbaubarkeit führen.

Der Erfindung liegt die Aufgabe zugrunde, ein verbessertes Verfahren zur Herstellung von Polymeren mit wiederkehrenden Succinyleinheiten, insbesondere von Polysuccinimid und Polyasparaginsäure zur Verfügung zu stellen.

Die Erfindung betrifft ein Verfahren zur Herstellung von Polymeren mit wiederkehrenden Succinyleinheiten, dadurch gekennzeichnet, daß man wenigstens eine gegebenenfalls substituierte 1,4-Butandicarbonsäure, Butendicarbonsäure oder ein Derivat davon mit einem Triammoniumsalz einer mehrwertigen Säure zusammengibt und unter Erwärmung polymerisiert.

Die Erfindung betrifft weiterhin ein Verfahren zur Herstellung von Polymeren mit wiederkehrenden Succinyleinheiten, dadurch gekennzeichnet, daß man das Anhydrid einer gegebenenfalls substituierten 1,4-Butandicarbonsäure oder Butendicarbonsäure, insbesondere Maleinsäureanhydrid mit einem Triammoniumsalz einer organischen oder anorganischen Säure zusammengibt und unter Erwärmung polymerisiert.

Unter Derivaten der gegebenenfalls substituierten 1,4-Butandicarbonsäure/Butendicarbonsäure werden für die Zwecke der vorliegenden Erfindung beispielsweise Salze und Substitutionsprodukte wie z.B. hydroxy- und aminosustituierte Dicarbonsäuren verstanden. Der Begriff Polymerisation bedeutet für die Zwecke der vorliegenden Erfindung keine Einschränkung auf ein bestimmtes Verfahren zur Herstellung höhermolekularer Stoffe, darunter fallen Polymerisationen in engerem Sinne als auch vor allem Polykondensation.

Die erfindungsgemäß hergestellten Polymere weisen vorzugsweise wiederkehrende Succinyl-Einheiten mit wenigstens einer der folgenden Strukturen auf 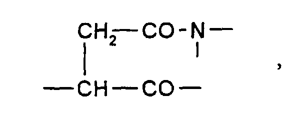 bevorzugt

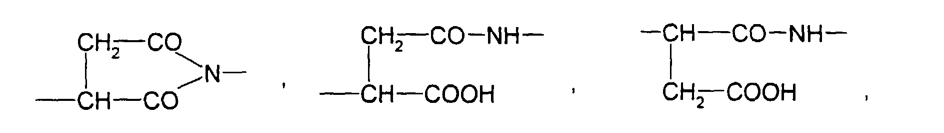

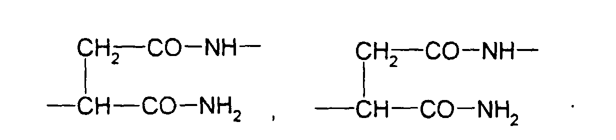

Weiterhin können je nach Ausführungsform Iminodissucinateinheiten, vorzugsweise wenigstens eine der folgenden Strukturen, enthalten sein: 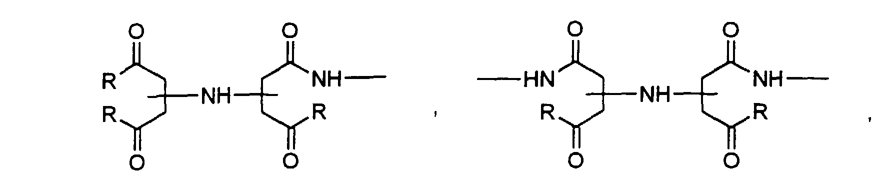 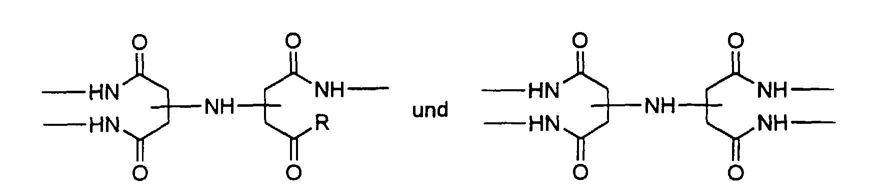 wobei
- R: OH, O⁻NH₄⁺ oder NH₂ bedeutet.

Die Iminodisuccinateinheiten können im Polymer statistisch verteilt oder bevorzugt als Endgruppe vorliegen. Bezogen auf die Summe aller wiederkehrenden Einheiten liegt die Iminodisuccinateinheit gegebenenfalls zu wenigstens 0,1 Mol-% vor. Das molare Verhältnis der im Polymer eingebauten Iminodisuccinateinheiten zur Summe aller im Polymer eingebauten Monomereinheiten beträgt vorzugsweise 0,1 Mol-% bis 99 Mol-%, bevorzugt 1 Mol-% bis 50 Mol-%, besonders bevorzugt 2 Mol-% bis 25 Mol-%.

Zusätzlich können durch geeignete Reaktionsführung und Wahl der Edukte weitere wiederkehrende Einheiten enthalten sein, z. B.
a) Äpfelsäure-Einheiten der Formel 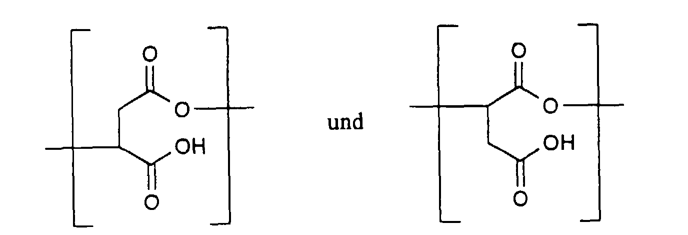
b) Maleinsäure- und Fumarsäure-Einheiten der Formel

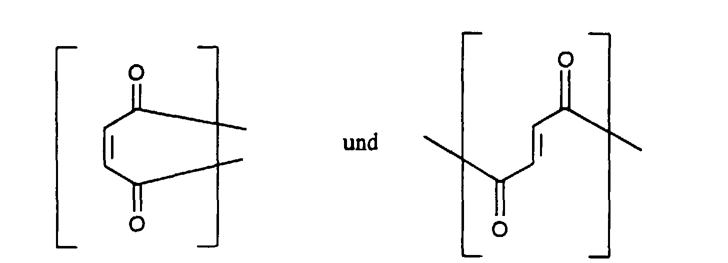

In einer bevorzugten Ausführungsform werden Maleinsäureanhydrid, Maleinsäure, Maleinsäurederivate, z.B. Maleinsäureester und Maleinsäurehalbester, Fumarsäure oder Fumarsäurederivate eingesetzt. Besonders bevorzugt ist Maleinsäure und Maleinsäureanhydrid.

Besonders bevorzugte Triammoniumsalze sind die entsprechenden Verbindungen der Zitronensäure und insbesondere der Phosphorsäure und der phosphorigen Säure. In einer bevorzugten Ausführung der Erfindung werden Maleinsäureanhydrid und Triammoniumphosphat miteinander umgesetzt.

In einer bevorzugten Ausführungsform wird das Triammoniumsalz als Reaktionspartner der gegebenenfalls substituierten Dicarbonsäure eingesetzt. Besonders bevorzugt ist hierbei, wenn auf 1 Mol zB MSA oder gegebenenfalls substituierte Dicarbonsäure oder Gemischen davon 1/3 bis 1,0 Mol Triammoniumsalz, insbesondere 0,4 bis 0,6 und besonders 0,5 bis 0,6 Mol verwendet wird.

In einer besonders bevorzugten Ausführungsform der Erfindung wird Maleinsäureanhydrid mit Triammoniumphosphat in der Schmelze im Verhältnis von etwa 1:0,505, vorzugsweise ohne zugefügtes Losungsmittel verwendet wird, bei etwa 60 bis 100°C in Gegenwart von Kristallwasser miteinander verschmolzen. Anschließend wird die Temperatur auf mindestens 140°C bis 250°C, vorzugsweise auf 180°C bis 200°C gesteigert, unter Abzug von Wasser, beispielsweise durch Destillation. Weiteres Wasser kann abgezogen werden, insbesondere durch Anlegen eines Vakuums.

Das erhaltene Polymerisationsprodukt, welches Polysuccinimideinheiten enthält, kann in üblicher Weise zu Polyasparaginsäure und deren Salzen hydrolysiert werden.

Die Erfindung betrifft weiterhin ein Verfahren zur Herstellung von Polymeren mit wiederkehrenden Succinyleinheiten, dadurch gekennzeichnet, daß man eine stickstoffhaltige Dicarbonsäure, insbesondere Asparaginsäure, in Gegenwart katalytischer Mengen eines Ammoniumsalzes polymersiert. In einer bevorzugten Ausführungsform wird ein Ammoniumphosphat oder Ammoniumphosphit als Katalysator für die Polymerisation, also zur Herstellung von Succinyleinheiten enthaltenden Polymeren verwendet. Besonders bevorzugt wird hierbei von einer substituierten Butandicarbonsäure, insbesondere Asparaginsäuren ausgegangen. Bei der Asparaginsäure kann es sich hierbei um L-, D- und DL-Asparaginsäure handeln. In einer bevorzugten Ausführungsform wird hierbei pro Mol N-substituierter Butandicarbonsäure 0,01 bis 0,2 Mol Triammoniumsalz, insbesondere 0,0,3 bis 0,15 Mol Triammoniumsalz, insbesondere Triammoniumphosphat und Triammoniumphosphit eingesetzt. Ebenso eignen sich katalytische Mengen an Diammoniumhydrogenphosphat und Ammoniumdihydrogenphosphat als Polymerisationskatalysator. Die Komponenten werden vorzugsweise bei Raumtemperatur vermischt, bei 80 bis 100°C verschmolzen und dann bei höherer Temperatur, insbesondere 140 bis 250°C, polymerisiert.

Es ist auch möglich, die erfindungsgemäß zu verwendenden Dicarbonsäuren zusammen mit Ammoniak oder anderen ammoniakliefernden Verbindungen als einem Triammoniumsalz zusammen mit dem erfindungsgemäß z.B. zu verwendenden Triammoniumsalz einzusetzen. Hierbei werden als Edukte vorzugsweise Maleinsäureanhydrid, Maleinsäure, Maleinsäurederivate, Fumarsäure und Fumarsäurederivate oder auch Gemische eingesetzt. Als stickstoffhaltige Komponenten können Ammoniak in flüssiger Form, gasförmig oder gelöst in geeigneten Lösungsmitteln sowie ammoniakliefernde Verbindungen wie z.B. Mono- oder Diammoniumcarbonat, Ammoniumphosphat (z.B. Diammoniumphosphat), Ammoniumsulfat, Ammoniumacetat oder Formamid oder Harnstoff oder sogar Gemische verschiedener N-haltiger Komponenten verwendet werden.

Hinsichtlich dieser Herstellungsvarianten sind insbesondere folgende Verfahren und Vorrichtungen bevorzugt:

Die Edukte können einzeln oder in Gemischen, in Substanz oder in Lösung, eingesetzt werden. Maleinsäureanhydrid wird in einer bevorzugten Ausführungsform als Schmelze eingesetzt.

Die Umsetzung der Edukte kann gegebenenfalls in Gegenwart eines Lösungsmittels durchgeführt werden. Als Lösungsmittel geeignet sind Wasser, niedere Alkohole, polar aprotische Lösungsmittel, wie Dimethylformamid, Formamid und Harnstoffe, N-Alkylpyrrolidon, Sulfolan, Aceton, Dimethylsulfoxid, Polyalkylenglykole, Polyalkylenglykolmonoalkylether und Polyalkylenglykoldialkylether. Ebenfalls geeignet sind überkritische Gase, wie z.B. Kohlendioxid und Ammoniak. Besonders geeignet ist Wasser oder/und Formamid.

In einer bevorzugten Ausführungsform sind die Edukte geschmolzenes Maleinsäureanhydrid (Edukt A) und Triammoniumphosphat (Edukt B). Maleinsäureanhydrid wird als Edukt A vorzugsweise in solchen Mengen eingesetzt, daß das molare Verhältnis von Stickstoff im Edukt B relativ zum Maleinsäureanhydrid im Edukt A zwischen 0,9 und 5,0, bevorzugt zwischen 1,0 und 4,0 und ganz besonders bevorzugt zwischen 1,5 und 3,0 zu 1 liegt.

Die erfindungsgemäßen Polymere sind auf verschiedenen Verfahrenswegen erhältlich. So können beispielsweise Zwischenprodukte wie Maleinsäurediammoniumsalz, Maleinsäuremonoammoniumsalz oder Maleinamidsäureammoniumsalz aus den oben genannten Edukten in einem getrennten Verfahrensschritt hergestellt und anschließend in Substanz oder in geeigneten Lösungsmitteln diskontinuierlich oder kontinuierlich thermisch polymerisiert werden.

Die thermische Polymerisation wird im allgemeinen bei Temperaturen zwischen 100°C und 350°C, bevorzugt zwischen 120°C und 260°C, besonders bevorzugt zwischen 140°C und 240°C, durchgeführt. Die Verweilzeit beträgt vorzugsweise zwischen 1 Sekunde und 600 Minuten, bevorzugt 5 Sekunden bis 180 Minuten, besonders bevorzugt 10 Sekunden bis 150 Minuten.

Ein weiteres Verfahren zur Herstellung der erfindungsgemäßen Polymeren besteht aus den folgenden Schritten:
a) Wenigstens eines der vorher unter A näher beschriebenen Edukte wird kontinuierlich mit wenigstens einem der vorher unter B beschriebenen Edukte in Kontakt gebracht, gegebenenfalls in Gegenwart eines Fluidisierungsmittels und auch gegebenenfalls unter Zusatz eines Comonomeren und gegebenenfalls durch Erwärmen auf etwa 100 bis 120°C aufgeschmolzen.
b) Das in situ erhaltene Reaktionsgemisch wird kontinuierlich in einem geeigneten Reaktor bei Temperaturen von 100°C bis 350°C, bevorzugt 120°C bis 260°C und besonders bevorzugt von 140°C bis 240°C mit Verweilzeiten von 1 Sekunde bis 600 Minuten, besonders bevorzugt 5 Sekunden bis 180 Minuten und besonders bevorzugt 10 Sekunden bis 150 Minuten polymerisiert.
c) Gegebenenfalls kann zum Ende der Polymerisation weiteres Maleinsäureanhydrid oder weitere Maleinsäure und eine Base zudosiert werden. Geeignete Basen sind Alkali- und Erdalkalihydroxide oder Carbonate wie beispielsweise Natronlauge, Kalilauge, Soda oder Kaliumcarbonat, Ammoniak und Amine wie Triethylamin, Triethanolamin, Diethylamin, Diethanolamin, Alkylamine etc.

Eine bevorzugte Ausführungsform des oben beschriebenen allgemeinen Verfahrens ist dadurch gekennzeichnet, daß die Reaktion der Edukte (A, B) im ersten Reaktionsschritt weitgehend adiabatisch erfolgt und die dabei freigesetzte Reaktionswärme eingesetzt wird, um das Reaktionsgemisch auf Polymerisationstemperatur zu bringen und im zweiten Reaktionsschritt das N-haltige niedermolekulare Derivat unter Erhalt eines Polymeren mit wiederkehrenden Succinyl-Einheiten zumindest teilweise zu polymerisieren.

Geeignete Vorrichtungen zur genügend schnellen Vermischung zweier Flüssigströme sind aus vielen Literaturangaben und Patenten bekannt (z.B. Ullmann: Encyclopedia of Industrial Chemistry, 1982, Vol. B2, Chap. 25; Vol. B4, 561-586; Perry's Chemical Engineers' Handbook, 6. ed. (1984), Mc-Graw-Hill, N.Y., 21-61; M.H. Pohl, E. Muschelknautz, Chem. Ing. Tech. 51 (1979), 347 - 364; Chem. Ing. Tech. 52 (1980), 295 - 291.)

Bevorzugte Vorrichtungen zur schnellen Vermischung der Eduktströme sind alle Arten von Strahlmischern, statischen Mischern und dynamischen Mischern. Besonders bevorzugte Vorrichtungen zur schnellen Vermischung der Edukte und zum Starten der exothermen Reaktion stellen Strahlmischer dar, deren weitere Vorteile bei der hermetischen Dichtheit, der variabel einstellbaren Mischenergie und der globalen plug-flow-Charakteristik liegen.

In einer bevorzugten Ausführungsform werden die Edukte bei der Durchführung des 1. Reaktionsschrittes zur Verminderung von unerwünschten Nebenreaktionen in einem schnell vermischenden Apparat der o.g. Bauart gemischt, gegebenenfalls unter Erwärmen, und parallel bzw. danach die exotherme Bildung der Zwischenprodukte durchgeführt. Die dabei freiwerdende Wärme wird in dem Edukt-Zwischenprodukt-Gemisch im wesentlichen gespeichert. Dadurch wird das Reaktionsgemisch auf Polymerisationstemperatur gebracht und gegebenenfalls das organische Lösungsmittel oder das Wasser sowie bei der Reaktion entstehendes Wasser ganz oder zumindest teilweise verdampft. In einer besonders bevorzugten Ausführungsform erfolgt die Mischung in < 2 s und die exotherme Bildung der Zwischenprodukte in weniger als 60 s. Das aus der ersten Reaktionsstufe austretende Reaktionsgemisch wird anschließend in einem geeigneten Apparat zur Polymerisation gebracht.

Für die thermische Polymerisation eignen sich grundsätzlich alle Apparate, die bei einer engen Verweilzeitverteilung der viskos-flüssigen Phase die notwendige Mindestverweilzeit zur Polymerisation und gleichzeitig eine zumindest partielle Verdampfung des Lösungsmittels, insbesondere des Wassers, sowie des bei der Reaktion gebildeten Wassers ermöglichen.

Bevorzugte Vorrichtungen zur thermischen Polymerisation sind also alle Apparate, die eine definierte Verweilzeit mit einer engen Verweilzeitverteilung für die feste oder hochviskosflüssige Phase aufweisen und gleichzeitig eine gute Temperierung durch ein zumindest partielles Verdampfen des Lösungsmittels (org. Lösungsmittel und/oder Wasser) und/oder des bei der Polymerisation gebildeten Reaktionswassers ermöglichen. Solche bevorzugten Vorrichtungen können beispielsweise sein
a) Verweilrohre
b) Hochviskosreaktoren (z. B. Schnecke, List-Reaktor), Buss-Reaktor
c) Trockner (z. B. Schaufeltrockner, Sprühtrockner, Tellertrockner, Bandtrockner)
d) Rührkesselkaskade
e) Dünnschichtverdampfer.
f) Mehrphasen-Wendelrohr-Reaktoren (DT 1 667 051, DE-A 219 967)

Besonders gute Ergebnisse werden erzielt, wenn die Edukte (A, B) einem Strahlmischer zugeführt werden, dem ein Rohrreaktor oder ein Mehrphasenwendelrohr nachgeschaltet ist. Diese Apparatekombination hat sich zur Durchführung des erfindungsgemäßen Verfahrens besonders bewährt.

Zur Kontrolle der Reaktortemperatur der durchgeführten Reaktionen kann eine vollständige oder auch partielle Kreisführung des Reaktionsgemisches in Kombination mit Wärmeabfuhr erfolgen. Für eine solche Reaktionsführung eignen sich insbesondere alle Reaktoren oben genannter Bauart mit Rückführung des Reaktionsgemisches in Kombination mit Wärmeabfuhr sowie alle Schlaufenreaktoren.

In einer weiteren Variante des erfindungsgemäßen Verfahrens kann zur Vermeidung eines zu schnellen und starken Temperaturanstiegs des Reaktionsgemisches aufgrund der sehr exothermen schnellen Zwischenproduktbildung eine Eduktkomponente an mehreren Stellen in geeigneter Weise entlang des Rohr- bzw. Mehrphasenwendelrohrreaktors eindosiert werden, so daß ein optimales Temperaturprofil erzielt werden kann. Dadurch wird vermieden, daß es zum Auftreten von zu hohen Temperaturen kommt, die zu Produktschädigungen führen können. Die Anzahl der zusätzlichen (ohne die Dosierung in die Mischdüse am Rohr- bzw. Mehrphasenwendelrohrreaktoreintritt) Dosierstellen liegt bevorzugt im Bereich von bis zu 10. Die Art der Zuspeisung wird so gewählt, daß eine gute Vermischung mit der Reaktionslösung erfolgt.

Die Dosierstellen dienen auch dazu, die gegebenenfalls zuzusetzenden Comonomeren (C) zuzuführen. Unter C werden z.B. Aminosäuren wie Glyzin etc. verstanden.

Gleichzeitig kann die letzte Dosierstelle, die kurz vor dem Reaktorausgang liegt, dazu benutzt werden, eine der oben genannten Basen und gegebenenfalls weiteres Edukt A zuzugeben, um eine Pfropfung des Polymeren z.B. mit Iminodisuccinateinheiten zu erreichen.

Die Vermischung der Edukte kann je nach den verwendeten Edukten bei Temperaturen zwischen 0°C und 200°C erfolgen. Die exotherme adiabatische Reaktion des ersten Reaktionsschritts liefert dann genügend Wärme, so daß der zweite Reaktionsschritt dann je nach Art und Konzentration der verwendeten Edukte bei 100 bis 350°C, bevorzugt bei 120 bis 260°C und besonders bevorzugt bei 140 bis 240°C stattfinden kann. Vorteilhaft wird die Temperatur über den Druck im Reaktor und die Mengenströme der zugeführten Edukte (A, B), gegebenenfalls durch den Gehalt an organischem Lösungsmittel und/oder Wasser eingestellt. Zur Unterstützung der Temperaturführung während der Reaktion können auch Kühl- und Heizmedien eingesetzt werden. Weiterhin können Produkt-Edukt-Bereiche mit unterschiedlichen Temperaturen im Reaktionssystem zwecks Wärmeaustausch direkt oder indirekt in Kontakt gebracht werden.

Die Verweilzeiten der obengenannten Edukte im einsetzbaren Reaktorsystem betragen bis zu 600 Minuten. Bevorzugt sind Verweilzeiten von bis zu 180 Minuten. Besonders bevorzugt sind mit steigender Temperatur abnehmende Verweilzeiten. Die Verweilzeit im Reaktorsystem wird vorzugsweise so gewählt, daß eine praktisch vollständige Umsetzung des im Unterschuß eingesetzten Edukts A, bevorzugt MSA, gewährleistet ist. Zur praktisch vollständigen Polymerisation kann es erforderlich sein, das bereits kurz nach der Vermischung in der ersten Reaktionsstrecke, z.B. in einem Rohrreaktor, erhaltene Monomeren- und Oligomerengemisch in eine weitere oben vorgeschlagene Vorrichtung, bevorzugt einen Hochviskosreaktor, umzusetzen. Besonders bevorzugt kann jedoch ein Hochviskosreaktor eingesetzt werden, in dem beide Schritte bis zur vollständigen Polymer-Bildung durchgeführt werden. Die erhaltenen Reaktionsprodukte sind je nach Wasser- bzw. Lösungsmittelgehalt wegen der freiwerdenden Reaktionsenthalpie heiße Lösungen oder lösungsmittelhaltige bzw. wasserhaltige Schmelzen. Die Reaktionsenthalpie kann weitgehend im Reaktor genutzt werden. Dadurch wird eine optimale Wärmeführung mit geringen Invest- und Betriebskosten einer verfahrenstechnischen Anlage erreicht, die zu einer hohen Wirtschaftlichkeit führt.

Beim Einsatz der Oligomer-haltigen Schmelzen in einem Hochviskosreaktor kann die Reaktionsgeschwindigkeit in einer bevorzugten Reaktionsführung im Gegensatz zur ebenfalls möglichen Direktsynthese aus den Zwischenprodukten Maleinsäurediammoniumsalz oder Maleinamidsäureammoniumsalz in einer solchen Vorrichtung durch die bereits vorgeheizten und aufgrund der freigesetzten Reaktionswärme partiell durch Verdampfen an Lösungsmittel verarmte viskose Masse erheblich gesteigert werden. Die Verweilzeit wird durch diese Verfahrensweise gegenüber dem Stand der Technik deutlich gesenkt.

Das Verfahren kann kontinuierlich oder diskontinuierlich durchgeführt werden. Bevorzugte Reaktoren sind Hochviskosreaktoren, z.B. Schnecke, List- und Buss-Reaktor.

Die primären Polymerprodukte können zunächst pulverisiert, dann mit Wasser ausgewaschen werden, wobei das Polysuccinimid zurückbleibt, das in üblicher Weise zur Polyasparaginsäure bzw. zu Salzen z.B. Natriumpolyasparaginsäure beispielsweise hydrolysiert werden kann.

Die primären Polymerisationsprodukte können aber auch durch Umsetzung mit einer Base gegebenenfalls in Gegenwart von Wasser in ein PAA-haltiges Copolymer-Salz überführt werden. Diese Umwandlung von PSI-haltigen in PAA-haltige Copolymere geschieht in einer geeigneten Vorrichtung durch Hydrolyse. Bevorzugt ist dabei ein pH-Wert zwischen 5 und 14 geeignet. In besonders bevorzugter Form wird ein pH-Wert von 7 bis 12 gewählt, insbesondere durch den Zusatz einer Base. Geeignete Basen sind Alkali- und Erdalkalihydroxide oder Carbonate wie beispielsweise Natronlauge, Kalilauge, Soda oder Kaliumcarbonat, Ammoniak und Amine wie Triethylamin, Triethanolamin, Diethylamin, Diethanolamin, Alkylamine etc. Die Hydrolyse der PSI kann somit teilweise aber auch vollständig erfolgen.

Niedermolekulare Anteile (insbesondere Phosphorsäuresalze) können aus dieser Lösung durch übliche Membrantechnologie nach Art der Meerwasserentsalzung abgetrennt werden. Sie können aber auch im Produkt verbleiben.

Die Temperatur bei der Hydrolyse liegt geeigneter Weise in einem Bereich einschließlich bis zum Siedepunkt der Succinylgruppen-haltigen Suspension oder Lösung bevorzugt bei 20 bis 150°C. Die Hydrolyse wird gegebenenfalls unter Druck durchgeführt. Die Hydrolyse wird gegebenenfalls unter Zusatz eines weiteren monoethylenisch ungesättigten Carbonsäurederivates durchgeführt. Geeignet sind beispielsweise Maleinsäureanhydrid, Maleinsäure, Citraconsäure, Itaconsäure, Aconitsäure, Acrylsäure und Fumarsäure.

Unter den basischen Bedingungen der Hydrolyse kann eine Addition der Aminogruppen des N-terminalen Endes des Polymermoleküls an das in der Salzform vorliegende monoethylenisch ungesättigte Carbonsäurederivat stattfinden.

In Abhängigkeit der vorne beschriebenen Polymerisationsbedingungen können die primären Polymerisationsprodukte auch ethylenisch ungesättigte Endgruppen besitzen. Daher kann es sinnvoll sein, dem Reaktionsgemisch während der basischen Hydrolyse gegebenenfalls auch Aminocarbonsäuren, z.B. Glycin, Asparaginsäure, Lysin, Glutaminsäure etc., zuzusetzen. Durch diese Maßnahme wird eine Propfung der Polymerendgruppen erreicht.

Die polymeren freien Säuren lassen sich aus den Salzen aber auch durch kontinuierliche oder diskontinuierliche Ionenaustauscherbehandlung freisetzen.

Die erfindungsgemäß hergestellten Polymere zeichnen sich durch ein verbessertes Calciumbindevermögen aus. Weiterhin zeigen sie Komplexbildungseigenschaften gegenüber Schwermetallen wie z.B. Kupfer, Eisen etc.. Sie können als Zusatz in phospatarmen und phosphatfreien Wasch- und Reinigungsmitteln verwendet werden. Die Polymerisate sind Builder für Waschmittel und bewirken während des Waschvorgangs eine Verminderung der Inkrustrierung und Vergrauung auf dem gewaschenen Textilgut.

Weiterhin inhibieren und verzögern die erfindungsgemäß hergestellten Polyasparaginsäuren die Ausfällung von Calciumcarbonat, Calciumsulfat und Calciumphosphat, aus wäßrigen Lösungen und sind daher als Wasserbehandlungsmittel geeignet. Sie können dem Wasser in Kühlkreisläufen, Verdampfern oder Meerwasserentsalzungsanlagen zugesetzt werden. Außerdem können sie als Belagsverhinderer bei der Eindampfung von Zuckersaft eingesetzt werden.

Aufgrund ihrer komplexbildenden Eigenschaft gegenüber Schwermetallen können die Polymere auch als Stabilisierungsmittel für Bleichmittel wie Wasserstoffperoxid in Bleichprozessen dienen.

### Beispiele

Die primären Polymerisationsprodukte wurden mittels Elementaranalyse charakterisiert. Hierbei wurden neben Kohlenstoff und Wasserstoff noch drei unterschiedliche Stickstoffarten bestimmt. Die Analyse unterschied zwischen ionisch gebundenem Stickstoff (Ammoniumionen), hydrolytisch empfindlichem Stickstoff (z. B. Amid- oder Imid-Stickstoff) und "nicht hydrolysierbarem" Stickstoff (Amin-Stickstoff). Auf diese Weise konnte die für eine verbesserte Wirksamkeit notwendige optimale Hydrolyse verfolgt werden.

Die nach der Hydrolyse erhaltenen erfindungsgemäßen Polymere wurden mit Hilfe von ¹H-NMR und ¹³C-NMR sowohl in der Salzform als auch nach Überführung in die freie Säure analysiert. Die Imidodibernsteinsäure-Einheiten wurden anhand der chemischen Verschiebungen von δ₁ = 3,8 ppm (¹H-NMR) und δ₂ = 55,5 ppm (¹³C-NMR) für die CH-Gruppen sowie von δ₃ = 2,7 ppm (¹H-NMR) und δ₄ = 36,7 ppm (¹³C-NMR) für die CH₂-Gruppen identifiziert.

Der Restmonomerengehalt wurde durch HPLC und die Polymerverteilung durch GPC gegen Polyacrylate oder Polyasparaginsäuren der Fa. Sigma als Standard bestimmt.

### Beispiel 1

98 g Maleinsäureanhydrid und 104 g Triammoniumphosphattrihydrat wurden unter Stickstoff in 45 Minuten auf 180°C erwärmt. Diese Temperatur wurde 1 Stunde gehalten. Dann wurde 1 Stunde durch Anlegen eines Vakuums Kristall- und Reaktionswasser entfernt. Anschließend wurde abgekühlt, mit Wasser in einem Becherglas mit einem Mixer zerkleinert, abgesaugt, gewaschen und getrocknet. Es wurden 95 g PSI als helles Produkt erhalten. Das Molekulargewicht betrug 2580, das Verhältnis α/β 23/77.

### Beispiel 2

98 g Maleinsäureanhydrid und 103,5 g Triammoniumphosphattrihydrat wurden in 110 Minuten auf 240°C (unter N₂) gebracht. Diese Temperatur wurde 1 Stunde gehalten. Dann wurde 1 Stunde lang volles Wasserstrahlvakuum angelegt und anschließend abgekühlt. Das erhaltene PSI wurde pulverisiert, mit Wasser salzfrei gewaschen und im Vakuum bei 50°C getrocknet. Man erhielt 99 g helles Produkt. Das Molgewicht betrug Mw 2550.

### Beispiel 3

98 g Maleinsäureanhydrid und 203 g Triammoniumphosphattrihydrat wurden unter N₂ in 160 Minuten auf 240°C erhitzt. Die Temperatur wurde 1 Stunde gehalten, dann wurde bei der gleichen Temperatur 1 Stunde Wasserstrahlvakuum angelegt. Nach dem Abkühlen wurde pulverisiert, mit Wasser gewaschen und im Vakuum bei 50°C getrocknet. Man erhielt 88 g PSI. Das Molgewicht Mw lag bei 2096.

### Beispiel 4

133 g Asparaginsäure und 10 g Ammoniumdihydrogenphosphat wurden in 100 ml Wasser 30 Minuten unter N₂ zum Kochen erhitzt. Dann wurde das Gemisch 1 Stunde gekocht, in 1 Stunde bei Normaldruck das Wasser abdestilliert, in 2,5 Stunden auf 200°C erhitzt, eine Stunde bei dieser Temperatur belassen, dann 1 Stunde unter vollem Wasserstrahlvakuum getrocknet und anschließend abgekühlt.

Es wurde pulverisiert, mit Wasser gewaschen, abtgesaugt und im Vakuum bei 50°C getrocknet. Man erhielt 104 g PSI. Das Molgewicht Mw lag bei 5858.

### Beispiel 5

Bei Beispiel 5 wurde analog Beispiel 4 verfahren. Als Katalysator wurden jedoch 10 g Diammoniumhydrogenphosphat eingesetzt. Man erhielt als Molgewicht Mw 4566.

### Beispiel 6

Beispiel 6 wurde analog Beispiel 4 jedoch ohne Katalysator durchgeführt. Man erhielt als Molgewicht Mw 2880.

### Beispiel 7

Beispiel 7 wurde analog Beispiel 4 durchgeführt. Als Katalysator wurden 10 g Triammoniumphosphat-trihydrat eingesetzt Man erhielt als Molgewicht Mw 4800.

### Beispiel 8

9 mol Maleinsäureanhydrid und 9 mol Triammoniumphosphattrihydrat wurden im Kolben auf 140°C unter Rühren und N₂ erhitzt Diese Schmelze wurde langsam in dem Füllraum einer ZSK-32-Schnecke eingetragen, wobei die Temperatur in der Schnecke bei 180 bis 190°C gehalten wurde (Beheizung). Bei 20 Umdrehungen pro Minute betrug die Verweilzeit 6 Minuten. Das PSI trat als schnell erhärtender, heller Strang aus, der granuliert war. Es wurde pulverisiert, mit Wasser gewaschen und im Vakuum bei 50°C getrocknet. Das Molgewicht Mw lag bei 2400.

Dieses Experiment kann auch kontinuierlich bei gleichzeitiger Zuführung von Maleinsäureanhydrid und Triammoniumphosphattrihydrat durchgeführt werden.

## Patentansprüche

1. Verfahren zur Herstellung von Polymeren mit wiederkehrenden Succinyl-einheiten, dadurch gekennzeichnet, daß man wenigstens eine gegebenenfalls substituierte 1,4-Butandicarbonsäure, Butendicarbonsäure oder ein Derivat davon mit einem Triammoniumsalz einer mehrwertigen Säure zusammengibt und unter Erwärmung polymerisiert.

2. Verfahren zur Herstellung von Polymeren mit wiederkehrenden Succinyl-einheiten gemäß Anspruch 1, dadurch gekennzeichnet, daß man das Anhydrid einer gegebenenfalls substituierten 1,4-Butandicarbonsäure oder Butendicarbonsäure mit einem Triammoniumsalz einer Säure zusammengibt und unter Erwärmung polymerisiert.

3. Verfahren nach wenigstens einem der vorhergehenden Ansprüche, dadurch gekennzeichnet, daß man als Ammoniumsalz das Triammoniumsalz der Zitronensäure, Phosphorsäure oder phosphorigen Säure verwendet.

4. Verfahren nach wenigstens einem der vorhergehenden Ansprüche, dadurch gekennzeichnet, daß man Maleinsäure, Maleinsäureanhydrid oder Fumarsäure verwendet.

5. Verfahren nach wenigstens einem der vorhergehenden Ansprüche, dadurch gekennzeichnet, daß das Triammoniumsalz Triammoniumphosphat ist.

6. Verfahren nach wenigstens einem der vorhergehenden Ansprüche, dadurch gekennzeichnet, daß Maleinsäureanhydrid und Triammoniumphosphat miteinander umgesetzt werden.

7. Verfahren nach wenigstens einem der vorhergehenden Ansprüche, dadurch gekennzeichnet, daß pro Mol Dicarbonsäure bzw. Anhydrid 0,3 bis 1 mol Triammoniumsalz verwendet werden.

8. Verfahren nach wenigstens einem der vorhergehenden Ansprüche, dadurch gekennzeichnet, daß Maleinsäureanhydrid mit Triammoniumphosphat in der Schmelze bei 60 bis 100°C einwirken und die Temperatur zur Polymerisation auf wenigstens 140°C bis 250°C gesteigert wird und anschließend oder gleichzeitig Reaktionswasser entfernt wird.

9. Verfahren zur Herstellung von Polymeren mit wiederkehrenden Succinyl-einheiten nach einem der vorhergehenden Ansprüche, dadurch gekennzeichnet, daß man eine stickstoffhaltige Dicarbonsäure in Gegenwart katalytischer Mengen eines Ammoniumsalzes polymerisiert.

10. Verfahren zur Herstellung von Polymeren mit wiederkehrenden Succinyl-einheiten gemäß Anspruch 9, dadurch gekennzeichnet, daß man Asparaginsäure in Gegenwart katalytischer Mengen eines Ammoniumsalzes polymerisiert.

11. Verfahren nach Anspruch 9, dadurch gekennzeichnet, daß das Ammoniumsalz in einer Menge von 0,01 bis 0,2 Mol pro substituierte Dicarbonsäure verwendet wird.

12. Verfahren nach Anspruch 9, dadurch gekennzeichnet, daß das Ammoniumsalz ein Ammoniumphosphat ist.

13. Verfahren nach Anspruch 9, dadurch gekennzeichnet, daß die substituierte Dicarbonsäure und Triammoniumphosphat zusammen erhitzt und bei 80 bis 100°C verschmolzen werden und bei wenigstens 140 bis 250°C eine Polymerisation des erhaltenen Produktes durchgeführt wird.

14. Verfahren nach wenigstens einem der vorhergehenden Ansprüche, dadurch gekennzeichnet, daß das erhaltene Polymerisationsprodukt in wäßrigem Milieu mit einer Base hydrolysiert wird.

15. Verfahren nach Anspruch 14, dadurch gekennzeichnet, daß das rohe Polymerprodukt pulverisiert, mit Wasser niedermolekulare Anteile ausgewaschen werden und anschließend hydrolysiert wird zu Alkali- oder Aminsalzen oder zur freien Säure.

16. Verfahren nach Anspruch 15, dadurch gekennzeichnet, daß die niedermolekularen Bestandteile Phosphat sein können.

17. Verfahren nach Anspruch 14, dadurch gekennzeichnet, daß das rohe Hydrolysat mittels Diffusion durch Membranen von niedermolekularen Anteilen befreit wird.

## Claims

1. Process for the preparation of a polymer with repeating succinyl units, characterized in that at least one optionally substituted 1,4-butane-dicarboxylic acid, butenedicarboxylic acid or a derivative thereof is brought together with a triammonium salt of a polybasic acid and the polymerization is carried out while heating.

2. Process for the preparation of a polymer with repeating succinyl units according to Claim 1, characterized in that the anhydride of an optionally substituted 1,4-butanedicarboxylic acid or butenedicarboxylic acid is brought together with a triammonium salt of an acid and the polymerization is carried out while heating.

3. Process according to at least one of the preceding claims, characterized in that the triammonium salt of citric acid, phosphoric acid or phosphorous acid is used as the ammonium salt.

4. Process according to at least one of the preceding claims, characterized in that maleic acid, maleic anhydride or fumaric acid is used.

5. Process according to at least one of the preceding claims, characterized in that the triammonium salt is triammonium phosphate.

6. Process according to at least one of the preceding claims, characterized in that maleic anhydride and triammonium phosphate are reacted with one another.

7. Process according to at least one of the preceding claims, characterized in that 0.3 to 1 mol of triammonium salt is used per mole of dicarboxylic acid or anhydride.

8. Process according to at least one of the preceding claims, characterized in that maleic anhydride acts with triammonium phosphate in the melt at 60 to 100°C, the temperature is increased to at least 140°C to 250°C for the polymerization and the water of reaction is simultaneously or subsequently removed.

9. Process for the preparation of polymers with repeating succinyl units according to one of the preceding claims, characterized in that a nitrogen-containing dicarboxylic acid is polymerized in the presence of catalytic amounts of an ammonium salt.

10. Process for the preparation of polymers with repeating succinyl units according to Claim 9, characterized in that aspartic acid is polymerized in the presence of catalytic amounts of an ammonium salt.

11. Process according to Claim 9, characterized in that the ammonium salt is used in an amount of from 0.01 to 0.2 mol per substituted dicarboxylic acid.

12. Process according to Claim 9, characterized in that the ammonium salt is an ammonium phosphate.

13. Process according to Claim 9, characterized in that the substituted dicarboxylic acid and triammonium phosphate are heated together and melted at from 80 to 100°C and polymerization of the resulting product is carried out at from at least 140 to 250°C.

14. Process according to at least one of the preceding claims, characterized in that the resulting polymerization product is hydrolysed with a base in an aqueous medium.

15. Process according to Claim 14, characterized in that the crude polymer product is powdered, low molecular weight fractions are washed out with water and the product is then hydrolysed to give an alkali metal salt or amine salt or the free acid.

16. Process according to Claim 15, characterized in that the low molecular weight constituents can be phosphate.

17. Process according to Claim 14, characterized in that the crude hydrolysate is freed from low molecular weight fractions by means of diffusion through membranes.

## Revendications

1. Procédé de préparation de polymères à unités constitutives succinyliques, caractérisé en ce que l'on mélange au moins un acide 1,4- butanedicarboxylique ou butènedicarboxylique éventuellement substitué ou un de leurs dérivés avec un sel de triammonium d'un polyacide et on polymérise en chauffant.

2. Procédé de préparation de polymères à unités constitutives succinyliques selon la revendication 1, caractérisé en ce que l'on mélange l'anhydride d'un acide 1,4-butanedicarboxylique ou butènedicarboxylique éventuellement substitué avec un sel de triammonium d'un acide et on polymérise en chauffant.

3. Procédé selon au moins l'une des revendications précédentes, caractérisé en ce que l'on utilise comme sel d'ammonium le sel de triammonium de l'acide citrique, de l'acide phosphorique ou de l'acide phosphoreux.

4. Procédé selon au moins l'une des revendications précédentes, caractérisé en ce que l'on utilise l'acide, maléique, l'anhydride maléique ou l'acide fumarique.

5. Procédé selon au moins l'une des revendications précédentes, caractérisé en ce que le sel de triammonium est le phosphate de triammonium.

6. Procédé selon au moins l'une des revendications précédentes, caractérisé en ce que l'on fait réagir ensemble de l'anhydride maléique et du phosphate de triammonium.

7. Procédé selon au moins l'une des revendications précédentes, caractérisé en ce que l'on utilise 0,3 à 1 mol de sel de triammonium par mol d'acide dicarboxylique ou d'anhydride.

8. Procédé selon au moins l'une des revendications précédentes, caractérisé en ce que l'on fait réagir de l'anhydride maléique avec du phosphate de triammonium à l'état fondu à une température de 60 à 100°C, et on fait monter la température pour la polymérisation à au moins 140°C à 250°C, et on sépare ensuite ou en même temps l'eau de réaction.

9. Procédé de préparation de polymères à unités constitutives succinyliques selon l'une des revendications précédentes, caractérisé en ce que l'on polymérise un acide dicarboxylique azoté en présence de quantités catalytiques d'un sel d'ammonium.

10. Procédé de préparation de polymères à unités constitutives succinyliques selon la revendication 9, caractérisé en ce que l'on polymérise de l'acide aspartique en présence de quantités catalytiques d'un sel d'ammonium.

11. Procédé selon la revendication 9, caractérisé en ce que l'on utilise le sel d'ammonium en une quantité de 0,01 à 0,2 mol par acide dicarboxylique substitué.

12. Procédé selon la revendication 9, caractérisé en ce que le sel d'ammonium est un phosphate d'ammonium.

13. Procédé selon la revendication 9, caractérisé en ce que l'on chauffe ensemble et on fait fondre à une température de 80 à 100°C l'acide dicarboxylique substitué et du phosphate de triammonium, et on effectue une polymérisation du produit obtenu à une température d'au moins 140 à 250°C.

14. Procédé selon au moins l'une des revendications précédentes, caractérisé en ce que l'on hydrolyse avec une base en milieu aqueux le produit de polymérisation obtenu.

15. Procédé selon la revendication 14, caractérisé en ce que l'on pulvérise le produit polymère brut, on extrait avec de l'eau les fractions de faible masse molaire, puis on hydrolyse pour obtenir des sels de métaux alcalins ou d'amines ou l'acide libre.

16. Procédé selon la revendication 15, caractérisé en ce que les constituants de faible masse molaire peuvent être un phosphate.

17. Procédé selon la revendication 14, caractérisé en ce que l'on débarrasse l'hydrolysat brut des fractions de faible masse molaire par diffusion à travers des membranes.
